# EUROPÄISCHE PATENTSCHRIFT

(11) **EP 3 863 874 B1**
(45) Veröffentlichungstag und Bekanntmachung des Hinweises auf die Patenterteilung: **10.01.2024**
(21) Anmeldenummer: 19786296.4
(22) Anmeldetag: 07.10.2019
(51) Int. Cl.: B60J 5/04

(54) **TÜRMODUL FÜR EINE FAHRZEUGTÜR, FAHRZEUGTÜR SOWIE HERSTELLUNGSVERFAHREN**
DOOR MODULE FOR A VEHICLE DOOR, VEHICLE DOOR AND PRODUCTION METHOD
MODULE DE PORTE POUR UNE PORTE DE VÉHICULE, PORTE DE VÉHICULE AINSI QUE PROCÉDÉ DE FABRICATION

(30) Priorität: 08.10.2018 DE 202018105741 U
(43) Veröffentlichungstag der Anmeldung: 18.08.2021
(73) Patentinhaber: Brose Fahrzeugteile SE & Co. Kommanditgesellschaft, Bamberg, 96052 Bamberg (DE)
(72) Erfinder: THIENEL, Michael, 95349 Thurnau (DE); RITTHALER, Eike, 96120 Bischberg (DE); CARL, André, 96450 Coburg (DE)
(74) Vertreter: Maikowski & Ninnemann Patentanwälte Partnerschaft mbB
(86) Internationale Anmeldenummer: PCT/EP2019/077099
(87) Internationale Veröffentlichungsnummer: WO 2020/074450

(56) Entgegenhaltungen:
- WO-A1-2015/022174
- WO-A1-2019/158436
- DE-A1-102007 037 680
- DE-A1-102012 023 588
- DE-A1-102013 105 080
- DE-A1-102015 012 262

## Beschreibung

Die vorgeschlagene Lösung betrifft insbesondere ein Türmodul für eine Fahrzeugtür, eine Fahrzeugtür sowie ein Herstellungsverfahren.

Ein Türmodul, als Teil einer hiermit gebildeten Fahrzeugtür, trägt üblicherweise mehrere Funktionselemente, wie zum Beispiel Teile eines Fensterhebers zur Verstellung einer Fensterscheibe der Kraftfahrzeugtür, wenigstens einen Lautsprecher oder Teile eines Türschließsystems. Es ist bekannt, einen derartigen, regelmäßig flächig erstreckenden Trägerbereich eines solchen Türmoduls zu einem wesentlichen Teil durch ein Organoblech zu bilden.

Derartige Türmodule sind in den Dokumenten DE 10 2012 023588 A1, DE 10 2013 105080 A1, WO 2015/022174 A1, DE 10 2007 037680 A1 DE 10 2015 012262 A1 und WO 2019/158436 A1 beschrieben.

Bei Organoblech handelt es sich um einen Faserverbundwerkstoff, typischerweise in Form eines Faser-Matrix-Halbzeugs. Bei einem solchen Faserverbundwerkstoff sind (Verstärkungs-) Fasern in einen Kunststoff, typischerweise in einen thermoplastischen oder duroplastischen Kunststoff, eingebettet. Die Fasern können hierbei insbesondere in Form von Gelegen, Geweben, Gestricken oder sogenannten UD-Tapes (d.h. unidirektionalen Bändern) aus Glas-, Kevlar-, Kohle- oder Kunststofffasern, also insbesondere Carbon-, Aramid- oder Naturfasern, in eine thermoplastische oder duroplastische Matrix eingebettet sein. Als thermoplastischer Kunststoff für die Matrix eignet sich beispielsweise Polypropylen (PP) oder Polyamid (PA) aufgrund der guten Haftungseigenschaften zu den Fasern. Die eingebetteten Fasern sind regelmäßig Endlosfasern, sodass auch von einem endlosfaserverstärkten Kunststoff gesprochen wird.

Unter der Charakterisierung "endlosfaserverstärkt" ist zu verstehen, dass die Länge der zur Verstärkung dienenden Fasern im Wesentlichen durch die Größe eines typischerweise plattenförmigen Organoblechs begrenzt ist. Innerhalb des Organoblechs ist eine Faser in der Regel nicht unterbrochen.

Dass der Trägerbereich zu einem wesentlichen Teil durch Organoblech gebildet ist, bedeutet dabei, dass das Organoblech denjenigen Teil des Trägerbereichs bildet, der den Großteil der unter normalen Betriebsbedingungen auftretenden Kräfte erfährt. Hierbei kann es sich insbesondere um den Teil des Trägerbereichs handeln, an dem eine oder mehrere Führungsschienen eines Fensterhebers vorgesehen sind. Ein (z.B. eine oder mehrere Führungsschienen tragender oder mindestens eine Führungsschiene integral ausformender, zusammenhängender) Teil des Trägerbereichs aus Organoblech oder mehrere (z.B. eine oder mehrere Führungsschienen tragende oder mindestens eine Führungsschiene integral ausformende) Teile des Trägerbereichs aus Organoblech erstrecken sich beispielsweise über etwa 30% oder mehr der Fläche des Trägerbereichs. Insbesondere kann sich das Organoblech über mehr als 40% und in der Regel über mindestens 50% der Fläche des Trägerbereichs erstrecken, sodass das Organoblech damit auch einen entsprechenden Anteil von mehr als 40% oder etwa 50% oder mehr der Oberfläche des Trägerbereichs bildet. Um die Festigkeitsvorteile des Organoblechs voll zu nutzen, wird man in der Regel versuchen, den Anteil des Organoblechs an der Fläche des Trägerbereichs zu maximieren. Eine mehrteilige Ausbildung des Organoblechs an einem Trägerbereich ist hierbei nicht ausgeschlossen.

Ein Hauptbestandteil des Türmoduls ist beispielsweise ein plattenförmiges Halbzeug, welches aus einem Organoblech besteht. Somit definiert das Organoblech z.B. eine wesentliche flächige Ausdehnung des Türmoduls, kann aber durch weitere Komponenten bzw. Materialien ergänzt sein. So können beispielsweise metallische Elemente und/oder Kunststoffelemente in das Organoblech eingearbeitet oder an dem Organoblech angebracht sein.

Insbesondere im Automobilbereich und hier zum Beispiel für die Herstellung von Fahrzeugtüren werden heutzutage bereits Organoblech in unterschiedlicher Form verwendet. Hierbei ist typischerweise vorgesehen, lediglich den Trägerbereich eines Türmoduls zumindest teilweise aus einem bestimmten Typ von Organoblech zu fertigen und hieran Kunststoffmaterial, zum Beispiel zur Bildung von Schnittstellen, anzuspritzen. Das Organoblech mit dem angespritzten Kunststoffmaterial wird dann regelmäßig von zusätzlich an einer Fahrzeugtür vorgesehenen Verkleidungsbauteilen überdeckt.

Vor diesem Hintergrund liegt der vorgeschlagenen Lösung die Aufgabe zugrunde, die Nutzung von Organoblech für Fahrzeugtüren weiter zu verbessern.

Diese Aufgabe ist sowohl mit einem Türmodul des Anspruchs 1 als auch von einer Fahrzeugtür des Anspruchs 4 und mit einem Herstellungsverfahren des Anspruchs 5 gelöst.

Ein Aspekt der vorgeschlagenen Lösung betrifft ein Türmodul für eine Fahrzeugtür, bei dem zusätzlich zu einem flächigen Trägerbereich, der zu einem wesentlichen Teil durch ein Organoblech gebildet ist und an dem mindestens eine Funktionskomponente der Fahrzeugtür festzulegen ist, mindestens ein weiterer (Funktion-) Bereich des Türmoduls, der im bestimmungsgemäß montierten Zustand des Türmoduls eine Fensteröffnung in der Fahrzeugtür berandet, zu einem wesentlichen Teil durch ein Organoblech gebildet ist.

Beispielsweise ist der mindestens eine weitere, ebenfalls durch ein Organoblech gebildete Bereich Teil einer Fensterbrüstung und/oder eines die Fensteröffnung definierenden (Fenster-) Rahmens für die Fahrzeugtür.

Der Trägerbereich und der mindestens eine weitere Bereich des Türmoduls sind durch unterschiedliche Typen von Organoblechen gebildet.

Durch die Verwendung unterschiedlicher Typen von Organoblech können je nach Funktion und Belastung des jeweiligen Bereichs des Türmoduls hieran angepasste Typen von Organoblech vorgesehen werden. Die unterschiedlichen Typen von Organoblech unterscheiden sich hierbei dann beispielsweise hinsichtlich einer Materialstärke, der Materialien der Verstärkungsfasern, der Ausrichtung der Verstärkungsfasern und/oder der Anzahl vorhandener Faserlagen voneinander. Die vorgeschlagene Lösung schließt somit insbesondere eine Ausbildung eines Türmoduls ein, bei dem lediglich bereichsweise ein bestimmter Typ eines Organoblech oder bestimmte Typen eines Organoblech kombiniert Verwendung finden.

Während zum Beispiel ein Großteil einer Trägerfläche des Türmoduls von einem ersten Typ Organoblech gebildet wird, kann zumindest lokal alternativ oder ergänzend ein weiterer Typ Organoblech an dem Türmodul vorgesehen sein. Beispielsweise kann in diesem Zusammenhang vorgesehen sein, dass ein erster Typ Organoblech mit vergleichsweise geringer Materialstärke für die Ausbildung eines Trägerbereichs des Türmoduls genutzt ist und derart dieser erste Typ Organoblech einen Großteil der Trägerfläche des Türmoduls definiert, an dem Funktionskomponenten der Fahrzeugtüren, wie zum Beispiel Teile eines Fensterhebers, ein Lautsprecher und/oder Teile eines Türschlosses angebracht werden. Mindestens ein weiterer Typ Organoblech ist dann mit diesem ersten Typ Organoblech verbunden, beispielsweise um den Trägerbereich lokal zu versteifen und/oder zusätzlich zu dem Trägerbereich einen weiteren Funktionsbereich an dem Modul auszubilden. Derart kann beispielsweise eine Versteifung mit einem anderen Typ Organoblech in einem Brüstungsbereich des Türmoduls vorgesehen sein, der im bestimmungsgemäß montierten Zustand des Türmoduls in eine Fahrzeugtür wenigstens einen Teil einer Fensterbrüstung der Fahrzeugtür definiert. Bei einem weiteren Funktionsbereich des Türmoduls, der über einen anderen Typ Organoblech gebildet wird, kann es sich beispielsweise um einen Rahmenbereich handeln, der zumindest teilweise einen eine Fensteröffnung berandenden Fensterrahmen an der fertig montierten Fahrzeugtür definiert.

Das Türmodul weist mindestens drei unterschiedliche Typen Organoblech auf, mit denen unterschiedliche Bereiche des Türmoduls gebildet sind.

Für eine Verbindung der unterschiedlichen Typen Organoblech können diese in einer Ausführungsvariante einander zumindest teilweise überlappen. Derart kann beispielsweise in einem Überlappungsbereich mindestens zweier unterschiedlicher Typen von Organoblechen eine formschlüssige Verbindung der unterschiedlichen Typen von Organoblechen durch angespritztes Kunststoffmaterial vorgesehen sein. An dem Türmodul sind somit dann beispielsweise in einer Ausführungsvariante Überlappungsbereiche zweier unterschiedlicher Typen von Organoblechen mit Kunststoffmaterial derart umspritzt und/oder durchspritzt, dass die mindestens zwei unterschiedlichen Typen von Organoblech in dem Überlappungsbereich durch das Kunststoffmaterial formschlüssig aneinander fixiert sind.

Dabei weist ein erster Typ von Organoblech ein einlagiges Gewebe, ein einlagiges Gelege, ein einlagiges Gestrick oder ein einlagiges UD-Tape (d.h., ein unidirektionales Band aus Verstärkungsfasern, die in Kunststoffmaterial eingebettet sind) auf. Alternativ oder ergänzend kann der erster Typ von Organoblech, mit dem dann beispielsweise ein Großteil der Trägerfläche des Türmoduls gebildet wird, eine Materialstärke im Bereich von 0,4 mm bis 1 mm, insbesondere im Bereich von 0,4 mm bis 0,8 mm aufweisen.

Ein zweiter Typ von Organoblech weist dann demgegenüber ein mehrlagiges Gewebe, ein mehrlagiges Gelege, ein mehrlagiges ein mehrlagiges Gestrick oder ein mehrlagiges UD-Tape auf und/oder eine Materialstärke im Bereich von 0,4 mm bis 4 mm, insbesondere im Bereich von 0,9 mm bis 2,8 mm. Gegenüber einem ersten Typ von Organoblech ist hier folglich ein zweiter Typ von Organoblech mit mindestens einer Faserlage mehr und/oder mit größerer Materialstärke und damit Materialdicke ausgebildet.

Die mindestens drei unterschiedlichen Typen von Organoblechen sind dadurch gekennzeichnet, dass
- ein erster Typ von Organoblech ein einlagiges Gewebe, ein einlagiges Gelege, ein einlagiges Gestrick oder ein einlagiges UD-Tape und/oder eine Materialstärke im Bereich von 0,4 mm bis 1 mm, insbesondere im Bereich von 0,4 mm bis 0,8 mm aufweist,
- eine zweiter Typ von Organoblech ein mehrlagiges Gewebe, ein mehrlagiges Gelege, ein mehrlagiges Gestrick oder ein mehrlagiges UD-Tape und/oder eine Materialstärke im Bereich von 0,4 mm bis 2,0 mm, insbesondere im Bereich von 0,9 mm bis 1,8 mm aufweist und
- ein dritter Typ von Organoblech eine Materialstärke im Bereich von 1,8 mm bis 4,0 mm, insbesondere im Bereich von 1,8 mm bis 2,8 mm aufweist.
Grundsätzlich kann hierbei der dritte Typ von Organoblech ebenfalls mehrlagig aufgebaut sein.

Im Rahmen eines vorgeschlagenen Verfahrens zur Herstellung eines Türmoduls für eine Fahrzeugtür, umfassend die Schritte Bereitstellen mindestens eines Organoblechzuschnitts und Bilden mindestens eines Trägerbereichs des Türmoduls, an dem mindestens eine Funktionskomponente der Fahrzeugtür festzulegen ist, mit dem Organoblechzuschnitt, ist vorgesehen, dass zusätzlich zu einem Trägerbereich mindestens ein weiterer Bereich des Türmoduls, der im bestimmungsgemäß montierten Zustand des Türmoduls eine Fensteröffnung in der Fahrzeugtür berandet, zu einem wesentlichen Teil durch ein Organoblech gebildet wird.

Der mindestens eine weitere Bereich ist zumindest teilweise durch einen Organoblechzuschnitt eines Typs Organoblech gebildet, der zu demjenigen Typ Organoblech verschieden ist, der für den Organoblechzuschnitt für den Trägerbereich verwendet wird. Dieser Aspekt der vorgeschlagenen Lösung geht folglich von dem Grundgedanken aus, dass nicht nur ein Trägerbereich eines Türmoduls aus einem (ersten Typ) Organoblech gebildet werden kann, sondern dass auch mindestens ein weiterer Funktionsbereich des Türmoduls an einer durch des Türmoduls zumindest mit definierter Fensteröffnung durch ein Organoblech gebildet wird, mithilfe wenigstens eines weiteren, anderen Typs von Organoblech. Bei Verwendung mindestens eines weiteren Typs von Organoblech kann dann dieser weitere Typ von Organoblech, zum Beispiel angesichts der im Betrieb im Bereich der Fensteröffnung auftretenden Belastungen, mindestens eine Faserlage mehr aufweisen und/oder mit einer größeren Materialstärke ausgebildet sein als der erste Typ Organoblech, der für eine Bildung eines Großteils der Trägerfläche (d.h. für mehr als 50%, insbesondere mehr als 60%, 70% oder 80% der Trägerfläche) genutzt ist.

Hierfür können sich beispielsweise die unterschiedlichen Typen von Organoblech überlappen und/oder auch zumindest bereichsweise einander nicht überlappend vorgesehen werden.

Auch bei einer Ausführungsvariante eines vorgeschlagenen Herstellungsverfahrens können sich die unterschiedlichen Typen von Organoblech hinsichtlich einer Materialstärke, der Materialien der in einem Organoblech verwendeten Verstärkungsfasern, der Ausrichtung der Verstärkungsfasern und/oder der Anzahl vorhandener Faserlagen in einem Organoblech voneinander unterscheiden. Wie bereits erläutert, können die Organoblechzuschnitte aus mindestens zwei unterschiedlichen Typen von Organoblechen zumindest teilweise miteinander überlappend angeordnet werden, beispielsweise um durch einen weiteren Typen von Organoblech lokal die Steifigkeit des Türmoduls zu beeinflussen, insbesondere eine Steifigkeit eines Bereichs des Türmoduls zu erhöhen, und/oder um die Organoblechzuschnitte einfacher lokal miteinander verbinden zu können.

In einer Ausführungsvariante des vorgeschlagenen Verfahrens kann an zumindest einen Teil wenigstens eines der Organoblechzuschnitte ein Kunststoffmaterial angespritzt werden. Mithilfe des angespritzten Kunststoffmaterials kann beispielsweise eine formschlüssige Verbindung einander überlappender Organoblechzuschnitte erreicht werden. So können beispielsweise an sich überlappenden Abschnitten wenigstens zweier Organoblechzuschnitte sich einander zumindest teilweise überdeckende Durchgangsöffnungen ausgebildet werden. Wird durch diese sich zumindest teilweise überdeckenden Durchgangsöffnungen der wenigstens zwei Organoblechzuschnitte dann anschließend Kunststoffmaterial gespritzt, sind hierüber die Organoblechzuschnitte an den sich überlappenden Abschnitten miteinander formschlüssig verbunden.

Beispielsweise können die Durchgangsöffnungen an den Organoblechzuschnitten durch Nadeln ausgebildet werden ein Organoblech Zuschnitt kann somit beispielsweise in einem Aufnahmelandes an einem mit mehreren Nadeln versehenen Werkzeugabschnitt angebracht werden, um in dem Organoblech Zuschnitt Durchgangsöffnungen zu erzeugen. Anschließend kann an denselben mit Nadeln versehenen Werkzeugabschnitt der mindestens eine weitere Organoblech Zuschnitt angebracht werden, um auch an diesem Organoblech Zuschnitt Durchgangsöffnungen zu erzeugen. Hierbei können die mit den Durchgangsöffnungen jeweils versehenen Abschnitte der Organoblechzuschnitte durch das Anbringen an dem Werkzeugabschnitt bereits einander zumindest abschnittsweise überlappend angeordnet werden. Die Organoblechzuschnitte mit den durch die Nadeln gebildeten Durchgangsöffnungen können dann in einem nachfolgenden Verarbeitungsschritt - unter Beibehaltung der vorgenommenen Anordnung - mit Kunststoffmaterial zumindest teilweise derart umspritzt und durchspritzt werden, dass das Kunststoffmaterial in noch flüssiger Form die Durchgangsöffnungen durchdringt und damit nach dem Aushärten über das Kunststoffmaterial die Organoblechzuschnitte an den mit den Durchgangsöffnungen versehenen Abschnitten formschlüssig miteinander verbunden sind.

In einer Ausführungsvariante wird durch angespritztes Kunststoffmaterial ein Abschnitt einer Dekoroberfläche der Fahrzeugtür gebildet, die im bestimmungsgemäß montierten Zustand des Türmoduls und der Fahrzeugtür einem Fahrzeuginnenraum zugewandt ist und an der Fahrzeugtür sichtbar ist. In dieser Ausführungsvariante wird somit über an das Organoblech angespritztes Kunststoffmaterial bereits zumindest ein Teil einer sichtbaren Oberfläche der Fahrzeugtür gebildet, die nicht zusätzlich von einem Verkleidungsbauteil, wie zum Beispiel einer Blende, überdeckt werden muss.

Insbesondere mit Blick auf die Bildung mindestens eines Abschnitt einer sichtbaren (Dekor-) Oberfläche an der fertiggestellten Fahrzeugtür durch an einen Organoblechzuschnitt angespritztes Kunststoffmaterial kann es von Vorteil sein, wenigstens einen Organoblechzuschnitt vor einer Einbringung in ein formgebendes Werkzeug, über das das Türmodul mit seiner endgültigen Kontur ausgeformt wird, vorzuformen. Durch die Vorformung des Organoblechzuschnitts liegt dieser bereits vor der abschließenden Formgebung und einem nachfolgenden Spritzgießprozess (bezogen auf die Endkontur des fertiggestellten Türmoduls) konturnah vor. Hierdurch ist insbesondere eine enge Tolerierung leichter möglich und das Risiko von Schönheitsfehlern an dem durch das angespritzte Kunststoffmaterial definierten Teil einer Dekoroberfläche reduzierbar.

Um den Fertigungsaufwand nicht übermäßig zu erhöhen, kann in einer derartigen Ausführungsvariante auch vorgesehen sein, dass wenigstens einer der Organoblechzuschnitte vor einer Einbringung in das Formgebungswerkzeug nicht vorgeformt wird. So wird dann folglich beispielsweise wenigstens ein Organoblechzuschnitt vorgeformt, während wenigstens ein anderer Organoblechzuschnitt nicht vorgeformt wird. Eine Vorformung kann sich somit beispielsweise auf diejenigen Organoblechzuschnitte konzentrieren, an denen nachfolgend über angespritztes Kunststoffmaterial zumindest ein Teil einer Dekoroberfläche gebildet werden soll.

Grundsätzlich kann in einer Ausführungsvariante vorgesehen sein, dass wenigstens einer der Organoblechzuschnitte bei einer Einbringung in ein Formgebungswerkzeug, über das das Türmodul mit seiner endgültigen (End-)Kontur ausgeformt wird, über Fixierungselemente an einem Teil des Werkzeugs fixiert wird, bevor wenigstens ein weiterer der Organoblechzuschnitte in das Werkzeug eingebracht wird. Dies kann beispielsweise für eine gewünschte Anordnung unterschiedlicher Organoblechzuschnitte aneinander in dem Werkzeug, insbesondere vor einem anschließenden Spritzgießprozess, von Vorteil sein. Zur Fixierung eines Organoblechzuschnitts in einem formgebenden Werkzeug können die Fixierungselemente beispielsweise als Nadeln und/oder Klemmstifte ausgebildet sein. Mithilfe als Nadeln ausgebildeter Fixierungselemente können dann beispielsweise wie vorstehend erläutert auch Durchgangsöffnungen an einem Organoblechzuschnitt erzeugt werden, wenn der Organoblechzuschnitt in dem Formgebungswerkzeug fixiert wird.

Alternativ oder ergänzend können Organoblechzuschnitte aus mindestens zwei unterschiedlichen Typen von Organoblechen in einem Werkzeug drapiert werden, über das das Türmodul mit seiner endgültigen Kontur ausgeformt wird. Hierunter wird insbesondere verstanden, dass Organoblechzuschnitte aus unterschiedlichen Typen Organoblech mit unterschiedlicher Erstreckung und mithin Größe und/oder mit unterschiedlicher Orientierung innerhalb des Formgebungswerkzeugs derart auf gekrümmten und/oder abgewinkelten Oberflächen des Werkzeugs angeordnet werden, dass die Organoblechzuschnitte an dem Formgebungswerkzeug bereits derart zueinander und gegebenenfalls abschnittsweise aneinander angeordnet sind, wie dies für die Ausbildung der unterschiedlichen Bereiche des Türmoduls mit Organoblech vorgesehen ist.

In dem Abschnitt der Dekoroberfläche, der durch angespritztes Kunststoffmaterial gebildet ist, können zusätzliche Verkleidungsbauteile und somit insbesondere Blenden entfallen. Bereits am Ende eines Spritzgießprozesses liegt hier folglich bereits ein Teil einer Dekoroberfläche für die Fahrzeugtür vor.

Durch das an das Organoblech angespritztes Kunststoffmaterial kann zumindest ein Teil einer Dekoroberfläche an einem Rahmenbereich für einen Fensterrahmen der Fahrzeugtür gebildet werden. An diesem Rahmenbereich ist somit im Unterschied zu bisher üblichen Konstruktionen keine Verblendung des Fensterrahmens mehr notwendig.

Grundsätzlich gelten vorstehend und nachstehend im Zusammenhang mit einem Herstellungsverfahren erläuterte Vorteile und Merkmale auch für Ausführungsvarianten eines entsprechenden Türmoduls und/oder einer entsprechenden Fahrzeugtür und umgekehrt. Des Weiteren sind die vorstehend und nachstehend genannten Aspekte der vorgeschlagenen Lösung ohne Weiteres untereinander kombinierbar.

Die beigefügten Figuren veranschaulichen exemplarisch mögliche Ausführungsvarianten der vorgeschlagenen Lösung.

Hierbei zeigen:
- Figur 1: in Explosionsdarstellung den Grundaufbau eines Ausführungsbeispiels eines Fahrzeugtür und eines vorgeschlagenen Türmoduls, das einen Fensterrahmen für eine Fensteröffnung der Fahrzeugtür integriert;
- Figuren 2A-2B: das Türmodul der Figur 1 montiert an einen Rohbau der Fahrzeugtür mit Blick auf eine Innenseite der Fahrzeugtür (Figur 2A) und auf eine Außenseite der Fahrzeugtür (Figur 2B);
- Figur 3: schematisch die Fahrzeugtür mit Blick auf die Innenseite unter Darstellung unterschiedlicher Bereiche des Türmoduls, die mit unterschiedlichen Typen von Organoblechen gebildet sind;
- Figur 4: eine vergrößerte Darstellung eines Ausschnitts Z der Figur 3;
- Figuren 5A-5B: exemplarisch ein vorgeschlagenes Türmodul, das mit unterschiedlichen Typen von Organoblechen gebildet ist, montiert an den Rohbau der Fahrzeugtür und mit Blick auf eine Innenseite (Figur 5A) und eine Außenseite (Figur 5B);
- Figur 6: vergrößerte Darstellung des Türmoduls der Figuren 5A und 5B;
- Figuren 7A-7B: verschiedene perspektivische Darstellungen des Türmoduls der Figuren 5A und 5B mit Blick auf eine Innenseite (Figur 7A) und eine Außenseite (Figur 7B);
- Figuren 8A-8B: das Türmodul der Figuren 5A bis 7B ohne hieran angespritztes Kunststoffmaterial und unter Hervorhebung unterschiedlicher Organoblechzuschnitte, die aus unterschiedlichen Typen von Organoblechen gebildet sind;
- Figur 9: die Organoblechzuschnitte des Türmoduls in Explosionsdarstellung;
- Figur 10: ein Flussdiagramm für eine Ausführungsvariante eines vorgeschlagenen Herstellungsverfahrens zur Herstellung des Türmoduls;
- Figur 11: das Türmodul in perspektivischer Ansicht mit Blick auf eine Innenseite unter Hervorhebung von Abschnitten, an denen zwei Teilschritte des Herstellungsverfahrens Anwendung finden;
- Figur 12: in perspektivischer Ansicht Organoblechzuschnitte des Türmoduls beim Aufnadeln auf ein formgebendes Werkzeug;
- Figur 13: schematisch zwei einander gegenüberliegende Werkzeugseiten des geöffneten (Form-) Werkzeugs, mit einem an einer Seite des Werkzeugs angebrachten und hieran aufgenadeltem Organoblechzuschnitt entsprechend der Figur 12;
- Figur 14: das Türmodul in einer gedrehten Ansicht mit Blick auf die Außenseite unter Hervorhebung eines Bereichs für einen Voreiler in dem Werkzeug und zwei Düsenpositionen für einen Spritzgießprozess, über den die dargestellten Strukturen aus Kunststoffmaterial an dem Türmoduls Träger erzeugt werden.

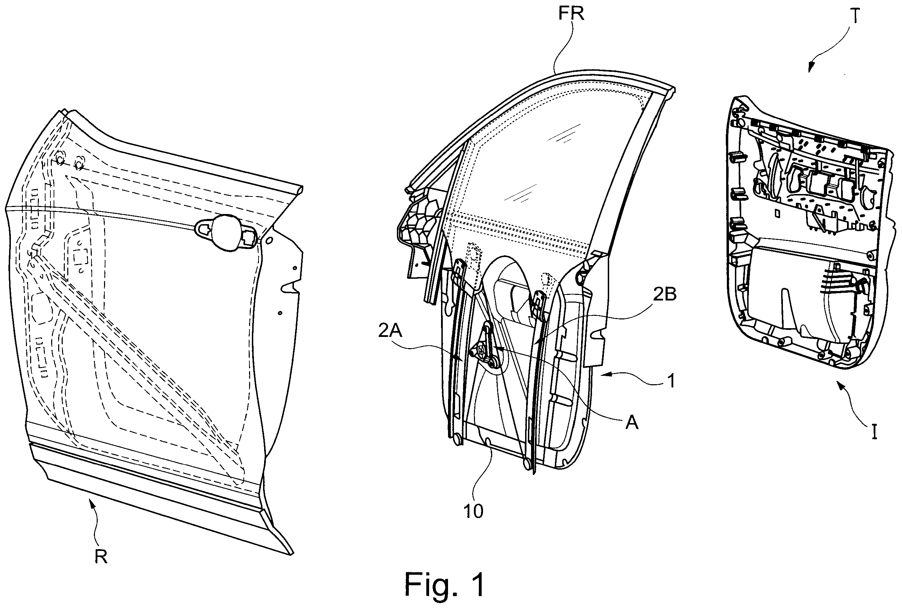

Die Figur 1 zeigt in Explosionsdarstellung eine Fahrzeugtür T, bei der an eine nachfolgend als Rohbau R bezeichnete Rohbaugruppe ein einen Fensterrahmen FR ausbildendes Türmoduls 1 montiert ist. Der Rohbau R umfasst typischerweise eine Türaußenhaut und eine starr hiermit verbundene Türinnenhaut. Der Rohbau R definiert einen Nassraum für die Unterbringung von Funktionskomponenten der Fahrzeugtür T, der über eine Trägerfläche 10 des Türmoduls 1 von einem dem Fahrzeuginnenraum zugewandten Trockenraum dichtend getrennt wird.

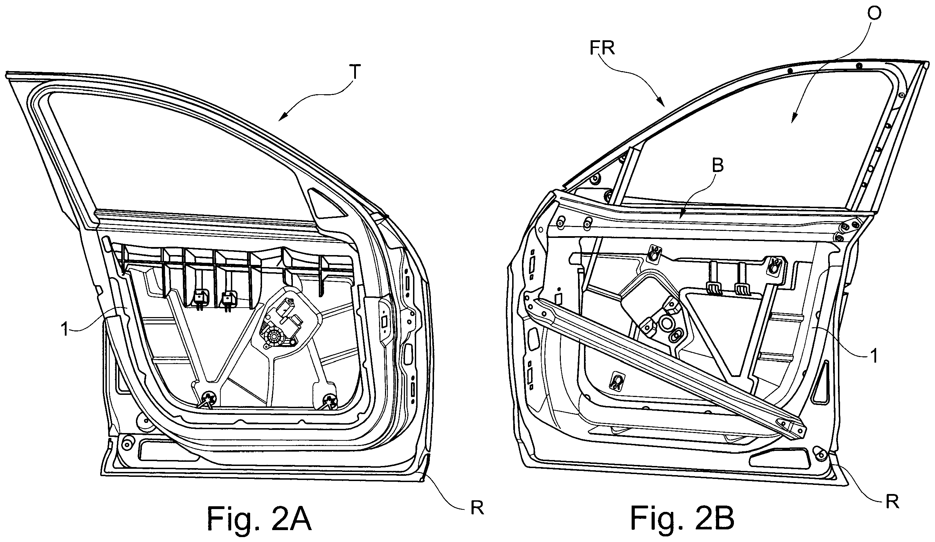

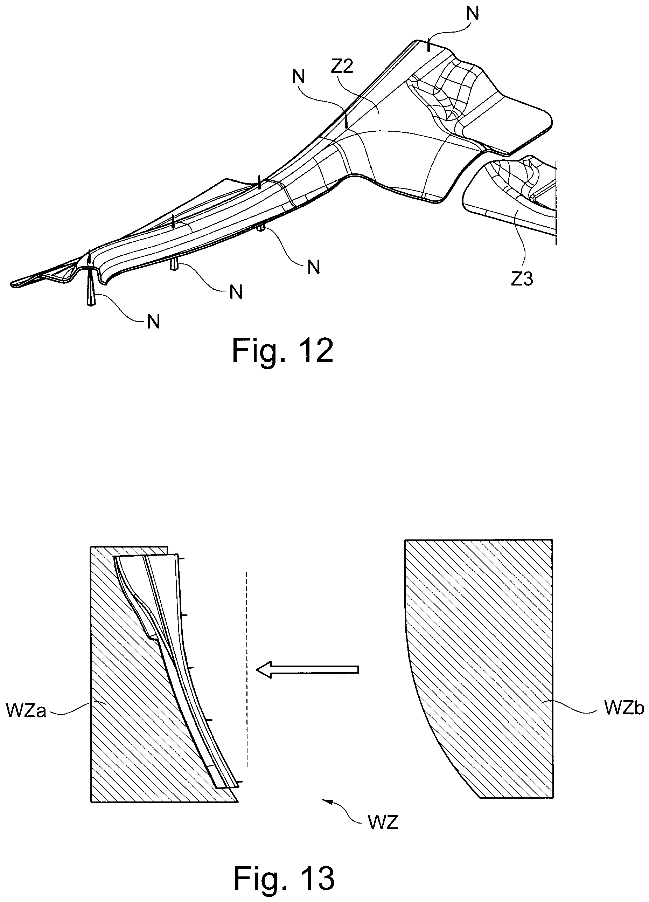

An der Trägerfläche 10, die sich unterhalb einer Fensterbrüstung B der montierten Fahrzeugtür T entsprechend den Figuren 2A und 2B erstreckt, sind unterschiedliche Funktionskomponenten der Fahrzeugtür T festgelegt, beispielsweise Komponenten eines Fensterhebers, ein Lautsprecher und/oder Komponenten eines Türschlosses. Weitere Funktionskomponenten können beispielsweise an oder in der Fahrzeugtür T vorzusehende Sensoren sein. Exemplarisch sind in der Figur 12 Führungsschienen 2A und 2B sowie ein Antrieb A als Funktionskomponenten des Fensterhebers an der Trägerfläche 10 angeordnet, und zwar auf einer der Türaußenhaut des Rohbaus R zugewandten Außenseite der Trägerfläche 10. Innenraumseitig ist ein Innenverkleidungsteil I vorgesehen, das die Trägerfläche 10 im zusammengebauten Zustand der Fahrzeugtür überdeckt.

Das Türmodul 1, das in den Figuren 2A und 2B in seinem an den Rohbau R montierten Zustand in zwei unterschiedlichen Seitenansichten dargestellt ist, ist vorliegend aus Organoblech hergestellt, und damit einstückig aus einem Faserverbundwerkstoff. Dies gilt insbesondere für den sich oberhalb der Fensterbrüstung B erstreckenden Fensterrahmen FR, der eine Fensteröffnung O an der Fahrzeugtür T umrandet. Eine Verbindung zwischen dem Rohbau R und dem Türmodul 1 erfolgt beispielsweise über Schraubverbindungen. Alternativ oder ergänzend kann mindestens eine Nietverbindung und/oder eine Klebeverbindung vorgesehen sein.

Bei dem in den Figuren 2A und 2B dargestellten Türmodul 1 ist zumindest in einem Abschnitt des sich oberhalb der Brüstung B erstreckenden Fensterrahmens FR keine Blende vorgesehen, um ein Organoblech des Türmoduls 1 in diesem Bereich zu überdecken. Vielmehr ist hier vorgesehen, dass ein den Fensterrahmen FR zumindest teilweise bildender Rahmenbereich 12 des Türmoduls 1 zumindest mit seiner dem Fahrzeuginnenraum zugewandten Seite von angespritztem Kunststoffmaterial derart überdeckt ist, dass hierdurch zumindest ein Teil einer sichtbaren Dekoroberfläche der fertigen Fahrzeugtür T gebildet ist. Hier wird folglich durch das angespritzte Kunststoffmaterial zumindest ein Abschnitt einer Dekoroberfläche der Fahrzeugtür T im Bereich des Fensterrahmens FR türmodulseitig gebildet.

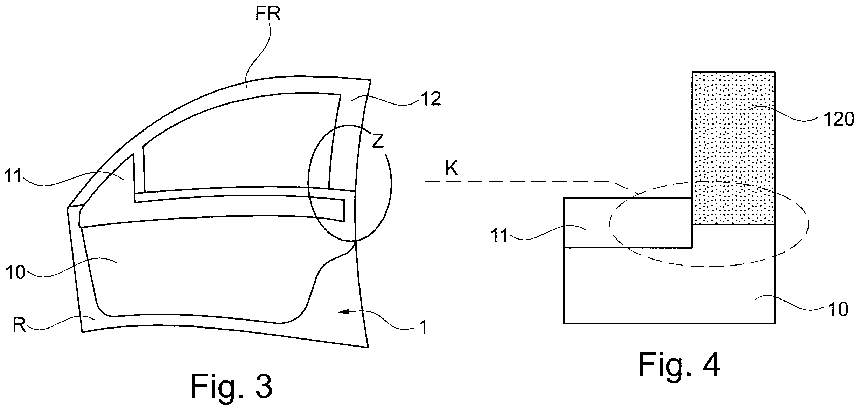

Der Rahmenbereich 12 ist insbesondere in der Figur 3 dargestellt, die die Fahrzeugtür 1 schematisch mit dem an den Rohbau R montierten Türmodul 1 in Seitenansicht zeigt. Zusätzlich zu dem unterhalb der Fensterbrüstung B vorgesehenen flächigen Trägerbereich 10 und dem sich oberhalb der Fensterbrüstung B erstreckenden und den Fensterrahmen FR definierenden Rahmenbereich 12 weist das Türmodul 1 hierbei noch einen Verstärkungsbereich 11 im Bereich eines Spiegeldreieckes und unmittelbar angrenzend an die Fensterbrüstung B auf. Der hier längserstreckte Verstärkungsbereich erstreckt sich dabei folglich entlang eines türmodulseitigen Brüstungsbereichs.

Bei der dargestellten Ausführungsvariante sind in den drei Bereichen 10, 11 und 12 des Türmoduls unterschiedliche Typen von Organoblechen verwendet. Die unterschiedlichen Typen von Organoblechen, die hier in dem Türmodul 1 miteinander kombiniert sind, gestatten dabei eine funktionsspezifische Auslegung der unterschiedlichen Bereiche 10, 11 und 12 in vergleichsweise einfacher Art und Weise. Die einzelnen Bereiche 10, 11 und 12 können beispielsweise mit Zuschnitten aus unterschiedlichen Organoblechen gebildet werden. Die unterschiedlichen Typen von Organoblechen unterscheiden sich hierbei hinsichtlich ihrer Materialstärke. Ergänzend können sich die Organoblechtypen aber auch hinsichtlich der Materialien ihrer Verstärkungsfasern, der Ausrichtung der Verstärkungsfasern und/oder der Anzahl vorhandener Faserlagen voneinander unterscheiden. Derart wird ein Laminat aus sich teilweise überlappenden Einzellagen gebildet, bei denen über eine lastgerechte Auswahl die Schichtdicken der verwendeten Organobleche in den jeweiligen Bereichen 10, 11 und 12 zueinander unterschiedlich sind.

Grundsätzlich können die Organobleche hier jeweils eine thermoplastische, aber auch duroplastische Matrix aufweisen und gegebenenfalls mit mindestens einem metallischen Einleger verstärkt sein. Für die thermoplastische Matrix wird beispielsweise Polypropylen (PP) oder Polyamid (PA) eingesetzt. Verstärkungsfasern der jeweiligen Organobleche sind beispielsweise aus Glas, Carbon oder Aramid. Alternativ oder ergänzend können auch Naturfasern Verwendung finden.

Bei der dargestellten Ausführungsvariante wird beispielsweise für den Trägerbereich 10 ein Organoblech mit einem einlagigen Gewebe oder einlagigen Gelege verwendet, wobei das Organoblech eine Materialstärke im Bereich von 0,4 mm bis 1 mm, hier beispielsweise im Bereich von 0,6 mm aufweist. In dem brüstungsnahen Verstärkungsbereich 11 ist ein mehrlagiges Gewebe oder Gelege vorgesehen sowie eine Materialstärke im Bereich von 0,9 mm bis 4 mm, beispielsweise im Bereich von 1 mm bis 1,5 mm. Im Rahmenbereich 12 ist wiederum eine Materialstärke im Bereich von 1,8 mm bis 4 mm, insbesondere im Bereich von 2 mm bis 2,5 mm vorgesehen, wobei die Fasern hier vergleichsweise stark unidirektional ausgerichtet sind. Die einzelnen Bereiche 10, 11 und 12 sind somit unterschiedlich dick und mit einer unterschiedlichen Anzahl an Faserlagen ausgebildet. Im Verstärkungsbereich 11 ist im Übrigen durchgehend wenigstens eine Überlappung entweder mit mindestens einem Abschnitt des Trägerbereichs 10 oder mit einem Abschnitt des Rahmenbereichs 12 (zum Beispiel im Bereich des Spiegeldreieckes) vorgesehen.

Durch die Verwendung unterschiedlicher Typen von Organoblechen kommt es entsprechend der vergrößerten Darstellung der Figur 4 an Knotenbereichen K zur Anlage unterschiedlicher Typen von Organoblechen aneinander und übereinander sowie zur Anbringung von Kunststoffmaterial insbesondere an derartigen Knotenbereichen K, beispielsweise für die Ausbildung eines Spritzgießabschnitts 120 für einen Teil einer rahmenseitigen Dekoroberfläche. Dies ist im Herstellungsverfahren des Türmoduls 1 zu berücksichtigen.

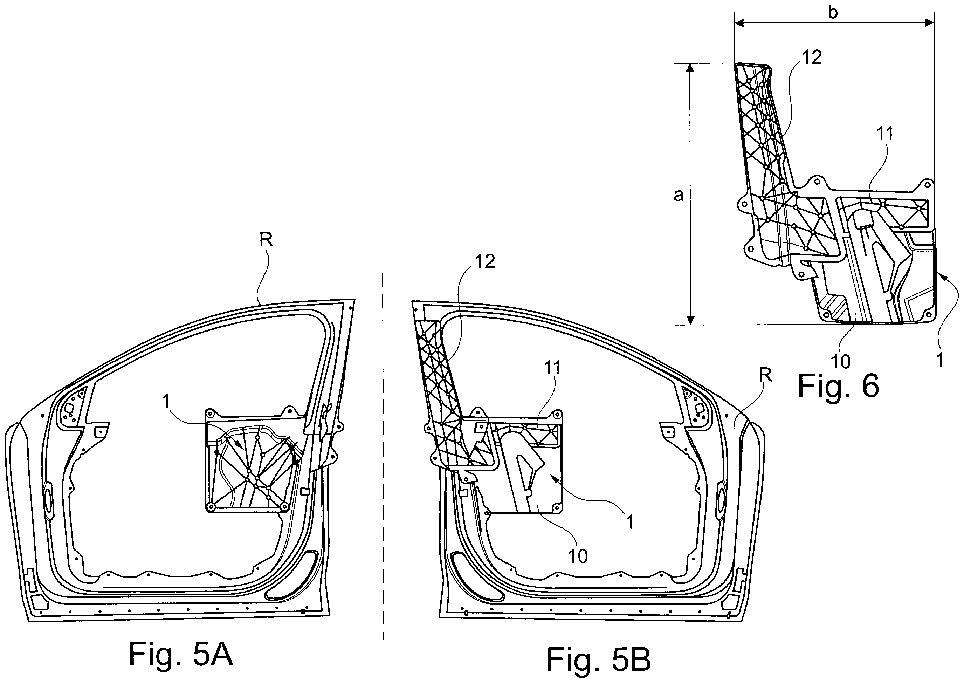

Anhand der Figuren 5A bis 14 werden der Aufbau des Türmoduls 1 und dessen Herstellung mit weiteren Details dargestellt. Das Türmodul 1 ist hierin der Einfachheit halber und zur besseren Erfassbarkeit einzelner Details jeweils nur ausschnittsweise nach Art eines sogenannten Demonstratormoduls dargestellt, sodass hier jeweils lediglich ein Ausschnitt des Rahmenbereichs 12, ein Ausschnitt des Rahmenbereichs 11 und ein Ausschnitt des flächigen Trägerbereichs 10 ersichtlich sind. Das Türmodul 1 ist dementsprechend in den Figuren 5A bis 14 lediglich maximal mit einer Länge a und einer Breite b dargestellt, die jeweils einem Bruchteil der Gesamtlänge respektive der Gesamtbreite des Türmoduls 1 in seiner fertiggestellten Form entsprechen.

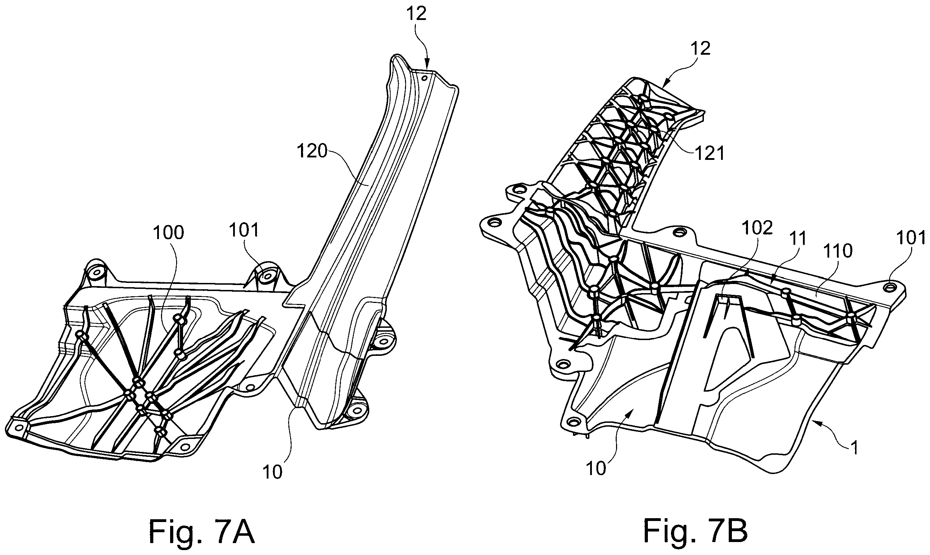

Die Figuren 5A und 5B zeigen das Türmodul 1 in seinem bestimmungsgemäß mit dem Rohbau R verbundenen Zustand mit Blick auf eine Innenseite und eine Außenseite der Fahrzeugtür T. Hieraus, insbesondere in Zusammenschau mit den Einzeldarstellungen der Figuren 6, 7A und 7B ist ersichtlich, dass die Bereiche 10, 11 und 12 des Türmoduls 1 mit unterschiedlichen Zuschnitten von Organoblechen unterschiedlicher Typen gebildet sind. Während hierbei ein Zuschnitt für den Verstärkungsbereich 11 einen brüstungsnahen Rand des für den Trägerbereich 10 vorgesehenen Zuschnitts vollständig überlappt, ist zwischen dem Zuschnitt für den Rahmenbereich 12 und Zuschnitt für den Trägerbereich 10 lediglich eine abschnittsweise Überlappung vorgesehen, um eine Verbindung der Zuschnitte an dem fertiggestellten Türmodul 1 zu gewährleisten.

An die Zuschnitte von Organoblechen für die Ausbildung der einzelnen Bereiche 10, 11 und 12 ist jeweils Kunststoffmaterial angespritzt. Anspritzungen und Umspritzung der einzelnen Zuschnitte können hierbei aus unterschiedlichem Kunststoffmaterialen hergestellt sein. Alternativ können unterschiedliche Elemente und Bereiche durch ein Kunststoffmaterial, wie z.B. PP LGF 30, in Spritzgießtechnik an den (Organoblech-) Zuschnitten ausgebildet werden.

So ist beispielsweise ein Spritzgießabschnitt 101 an dem Türmodul 1 vorgesehen, über den randseitig an den jeweiligen Bereichen 10, 11 und 12 Befestigungsöffnungen ausgebildet sind. Über die Befestigungsöffnungen des Spritzgießabschnitts 101 wird das Türmodul 1 an der Türinnenhaut des Rohbaus R fixiert. Wenigstens ein Teil der an dem Spritzgießabschnitt 101 ausgebildeten, randseitigen Befestigungsöffnungen kann ferner zur Festlegung von Funktionskomponenten an dem Türmodul 1 dienen. Ferner sind an einer Innenseite der Trägerfläche 10 des Türmoduls mit dem Kunststoffmaterial angespritzte Verstärkungsrippen 100 zur wenigstens lokalen Versteifung des Trägerbereichs 10 und/oder zur lokalen Versteifung etwaiger Befestigungsöffnungen ausgeformt.

An den Rahmenbereich 12 ist innenseitig ferner über das Kunststoffmaterial ein Spritzgießabschnitt 120 gebildet, der einen Teil einer rahmenseitigen Dekoroberfläche ausbildet. Über den Spritzgießabschnitt 120 aus an den Rahmenbereich 12 angespritztem Kunststoffmaterial wird hierbei dann beispielsweise ein Abschnitt einer Dekoroberfläche mit genarbter Optik gebildet, sodass wenigstens über einen Teil des Rahmenbereichs 12 eine separate Verblendung nicht mehr notwendig ist (vergleiche insbesondere Figur 7A).

Auf einer Außenseite des Türmoduls 1 entsprechend der Figur 7B sind an den Rahmenbereich 12 ebenfalls Verstärkungsrippen über einen Spritzgießabschnitt 121 ausgebildet. Ebenso ist der Verstärkungsbereich 11 über einen Spritzgießabschnitt 110 mit Verstärkungsrippen verstärkt. Auf der in der Figur 7B dargestellten Außenseite kann ferner an dem Trägerbereich 10 ein Teil einer Führungsschiene 2A, 2B über einen Spritzgießabschnitt 102 ausgeformt sein oder alternativ eine Lagerstelle zumindest für eine Führungsschiene 2A, 2B des Fensterhebers.

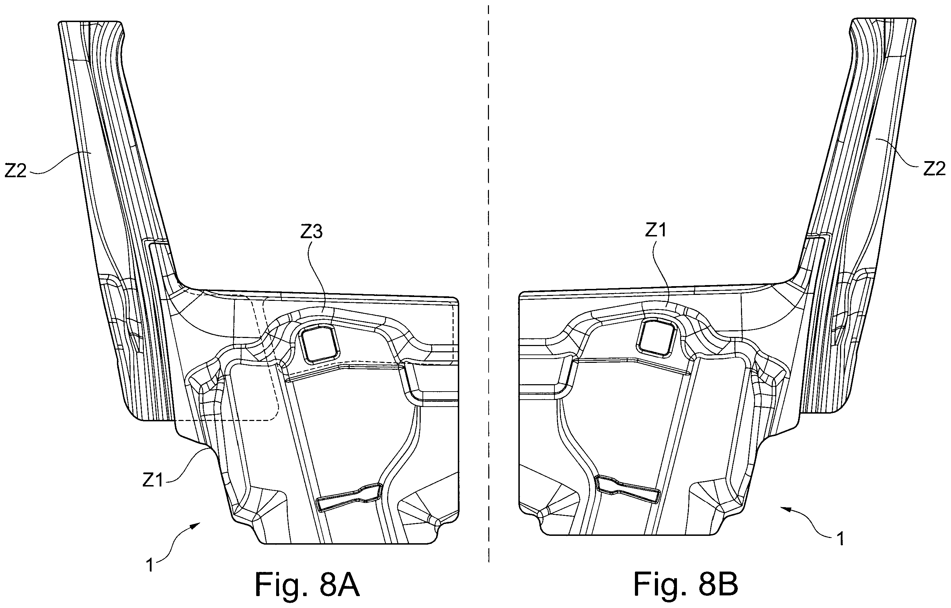

Das dargestellte Türmodul 1 zeichnet sich durch die Verwendung von unterschiedlich dicken, aufeinander umgeformten und gepatchten Organoblechen aus, die erst in einem formgebenden Werkzeug thermogeformt werden, um das Türmodul 1 zu bilden. Nach der Formgebung über das Werkzeug erfolgt in demselben Werkzeug eine Spritzgussfunktion zur Ausbildung von Schnittstellen, von Funktionsbereichen (wie zum Beispiel der Führungsschienen 2A, 2B in dem Spritzgießabschnitt 102) und von Versteifungsrippen. Details zu Ausführungsvarianten eines Herstellungsverfahrens sind anhand der nachfolgend erläuterten Figuren 8A bis 14 verdeutlicht.

So zeigen die Figuren 8A und 8B zunächst das Türmodul 1 der Figuren 6 bis 7B ohne das hieran angespritzte Kunststoffmaterial mit Blick auf die Außenseite (Figur 8A) und die Innenseite (Figur 8B). In den Figuren 8A und 8B sind dabei Zuschnitte Z1, Z2 und Z3 hervorgehoben, mit denen die funktional und räumlich separierten Bereiche 10, 11 und 12 des Türmoduls 1 gebildet werden. Ein erster Zuschnitt Z1 besteht hierbei aus einem Organoblech eines ersten Typs mit einer Materialstärke im Bereich von 0,6 mm. Der Zuschnitt Z1 weist hierbei zum Beispiel lediglich eine Faserlage auf. Ein zweiter Zuschnitt Z2 besteht für die Ausbildung des Rahmenbereichs 12 aus einem Organoblech eines zweiten Typs. Das Organoblech des zweiten Typs für den zweiten Zuschnitt Z2 für den Rahmenbereich 12 weist mehrere (mindestens zwei) Faserlagen, insbesondere gegebenenfalls ein UD-Tape, sowie eine Materialstärke im Bereich von 2,0 mm bis 2,5 mm bei vergleichsweise starker unidirektionaler Ausrichtung der Fasern auf. Ein dritter Zuschnitt Z3 für den Verstärkungsbereich 11 besteht aus einem Organoblech eines dritten Typs und kann ebenfalls mehrere Faserlagen aufweisen. Eine Materialstärke des Organoblechs des dritten Typs liegt hierbei Bereich von 1 mm bis 1,5 mm.

In der dargestellten Ausführungsvariante kann grundsätzlich vorgesehen sein, dass die Verstärkungsfasern für alle drei Zuschnitte Z1, Z2 und Z3 jeweils in ein- oder mehrlagigen Geweben, Gelegen, Gestricken oder in UD-Tapes vorgesehen und als Glasfasern in einer thermoplastischen Matrix ausgebildet sind.

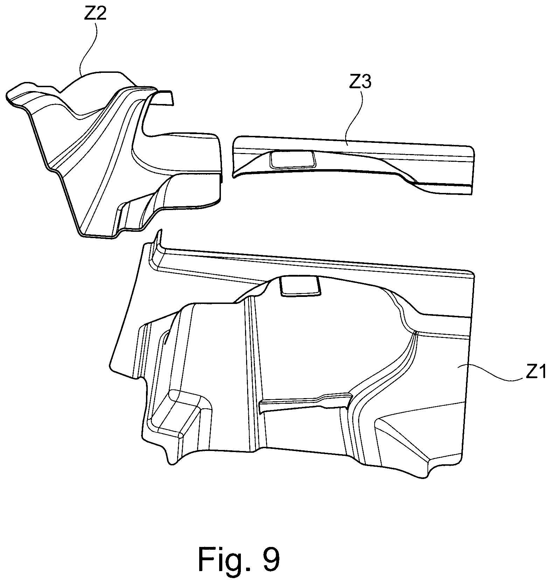

Entsprechend der Explosionsdarstellung der Figur 9 werden die einzelnen Zuschnitte Z1, Z2 und Z3 aus den unterschiedlichen Typen von Organoblechen zunächst separat hergestellt und dann mithilfe eines formgebenden Werkzeugs W (vergleiche Figur 13) zur Ausbildung des Türmoduls 1 genutzt.

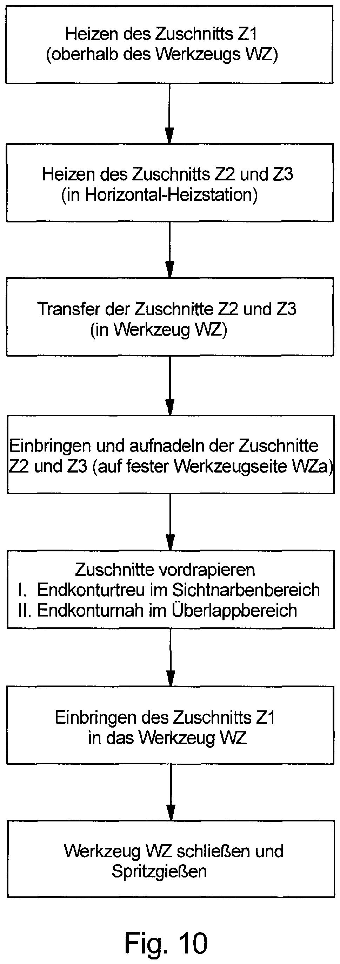

Bei einem anhand des Flussdiagramms der Figur 10 exemplarisch dargestellten Herstellungsverfahrens ist dann beispielsweise ein Prozessablauf wie folgt vorgesehen:
1. Zunächst wird der den Trägerbereich 10 maßgeblich ausbildende, flächige Zuschnitt Z1 aufgeheizt, und zwar oberhalb des eigentlichen (Form-) Werkzeugs WZ, das exemplarisch und schematisch in den Figuren 12 und 13 skizziert ist.
2. Im Anschluss erfolgt ein Heizen der Zuschnitte Z2 und Z3 in einer Heizstation, z.B. einer Horizontal-Heizstation.
3. Anschließend werden die Zuschnitte Z2 und Z3 in das Werkzeug WZ transferiert, zum Beispiel über einen Nadelgreifer.
4. Hierbei werden die Zuschnitte Z2 und Z3 an einer festen Werkzeugseite WZa des Werkzeugs WZ angebracht und an Nadeln N des Werkzeugs WZ aufgenadelt.
5. Innerhalb des Werkzeugs WZ werden dann die Zuschnitte Z2 und Z2 vordrapiert. Für den Rahmenbereich 12, an dem der Spritzgießabschnitt 120 zur Ausbildung eines Teils einer rahmenseitigen Dekoroberfläche angespritzt wird, wird insbesondere der Zuschnitt Z2 möglichst entkonturtreu vordrapiert. Für das entkonturtreue Vordrapieren der Zuschnitte ist ein möglichst großflächiger Kontakt an dem Werkzeug WZ vorgesehen, insbesondere um eine vergleichsweise starke Abkühlung vor dem Überspritzen mit Kunststoffmaterial zu erreichen. An anderer Stelle kann das Vordrapieren der Zuschnitte entkonturnah ausreichen. Beispielsweise ist in einem Überlappungsbereich der Zuschnitte Z2 und Z3 lediglich ein endkonturnahes Drapieren der Zuschnitte Z2 und Z3 erforderlich. Hier ist dementsprechend nur ein stellenweiser Kontakt mit dem Werkzeug WZ für eine langsamere Abkühlung vorgesehen.
6. Während für das Einbringen und Aufnadeln der Zuschnitte Z2 und Z3 in dem Werkzeug WZ und das Vordrapieren der Zuschnitte Z2 und Z3 eine Fertigungsmaschine vollständig geöffnet war, wird diese im Anschluss in eine Zwischenposition überführt. In dieser Zwischenposition wird der Zuschnitt Z1 für die Ausbildung der Trägerfläche 10 in das Werkzeug WZ eingebracht.
7. Anschließend wird das Werkzeug WZ geschlossen und der Spritzgießprozess ausgeführt, um die einzelnen Spritzgießabschnitte 100, 101, 102, 110, 120 und 121 an den in dem Formwerkzeug WZ angeordneten Zuschnitten Z1, Z2 und Z3 der unterschiedlichen Typen von Organoblechen auszuformen.

Im Rahmen der vorgeschlagen Ausführungsvariante werden folglich die Zuschnitte Z2 und Z3 mit größerer Materialstärke, die dadurch eine höhere Wärmekapazität haben, früher an dem Werkzeug WZ angeordnet und vorgeformt, bevor ein Zuschnitt Z1 aus einem dünneren Organoblech in das Werkzeug WZ transportiert wird. Die Zuschnitte Z2 und Z3 können hierbei neben der das Werkzeug WZ aufnehmenden Fertigungsmaschine in einer geeigneten Station auf Umformtemperatur bereits umgeformt werden. Eine solche Heizstation weist beispielsweise einen IR-Strahler oder ein Umluftofen auf.

Im Rahmen des Transfers der Zuschnitte Z2 und Z3 in das Werkzeug WZ können die Zuschnitte bereits vorgeformt und zumindest teilweise konsolidiert werden. Ein für den Transfer vorgesehenes Handlingsystem kann hier dann beispielsweise gleichzeitig als Vorformer dienen. Nachdem das Handlingsystem nach Abschluss des Vorformens und der Anordnung der Zustände Z2 und Z3 in dem Werkzeug WZ aus dem Werkzeug WZ verstellt wurde, wird der dünnere Zuschnitt Z1 in das Werkzeug WZ eingebracht. Hierbei wurde der dünnere Zuschnitt Z1 zum Beispiel oberhalb einer Kavität des Werkzeugs WZ beheizt, z.B. über ein IR-Strahlerfeld. In diesem Zusammenhang kann auch vorgesehen sein, dass für die Zuführung des dünneren Zuschnitts Z1 lediglich noch eine lineare Verlagerung in das Werkzeug WZ hinein ausgeführt werden muss.

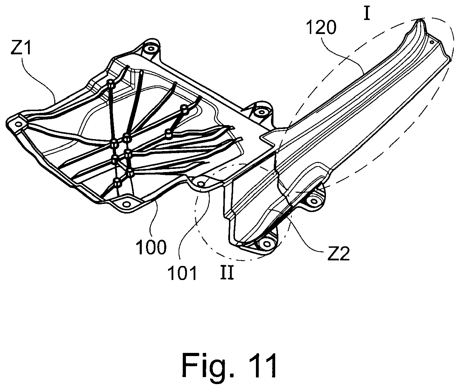

An den mit I. und II. in der Figur 11 hervorgehobenen Teilbereichen des Rahmenbereichs 12 wird der Zuschnitt Z2 während des Herstellungsprozess in der dargestellten Ausführungsvariante besonders vordrapiert. Im Teilbereich I., an dem über angespritztes Kunststoffmaterial der verblendete Teil des Rahmenbereichs 12 erzeugt wird, erfolgt möglichst eine vollständige Konsolidierung, um ein vollständiges Überspritzen mit dem Kunststoffmaterial, hier zum Beispiel PP LGF 30, sicherzustellen. Ferner erfolgt in diesem Teilbereich keine Überlappfügung von zwei Zuschnitten, sodass die Oberflächentemperatur nicht für die Prozesszeiten dominierend ist und das Überspritzen des kälteren Organoblechzuschnitts Z2 für die vorzusehende Sichtnarbung über das angespritzte Kunststoffmaterial prozesssichere Bedingungen ermöglicht.

In dem Teilbereich II. erfolgt demgegenüber ein endkonturnahes Vordrapieren mit starker Verprägung des Zuschnitts Z2. Hier steht folglich ein größeres Prozessfenster zu Verfügung, da eine langsamere Abkühlung ohne Werkzeugkontakt erfolgt.

Die Figuren 12 und 13 zeigen weitere Details für den Herstellungsprozess. So sind hieraus insbesondere Nadeln N ersichtlich, die an einer festen Werkzeugseite WZa des Werkzeugs WZ ausgebildet sind und an denen die Zuschnitte Z1, Z2 und Z3 aus Organoblech - in den Figuren 12 und 13 exemplarisch der für den Rahmenbereich 12 vorgesehene Zuschnitt Z2 - aufgenadelt werden können, um den entsprechenden Zuschnitt an dem Werkzeug WZ zu fixieren. Entsprechende Nadeln N könnten hierbei grundsätzlich auch an einer gegenüberliegenden Werkzeugseite WZb vorgesehen sein, sind in der Figur 13 jedoch nicht dargestellt.

Über die Nadeln N können beim Fixieren der Zuschnitte Z1, Z2 und/oder Z3 an dem Werkzeug WZ auch Durchgangsöffnungen an dem jeweiligen Zuschnitt erzeugt werden. Insbesondere können derartige Durchgangsöffnungen in Überlappungsbereichen mindestens zweier Zuschnitte Z1 bis Z3 erzeugt werden. Durch diese sich dann zumindest teilweise überdeckenden Durchgangsöffnungen mehrerer Zuschnitte Z1 bis Z3 kann dann Kunststoffmaterial eingebracht werden, sodass übereinanderliegende Abschnitte der Zuschnitte Z1 bis Z3 in dem Überlappungsbereich über das angespritzte Kunststoffmaterial durchspritzt werden und formschlüssig miteinander fixiert sind, wenn das Kunststoffmaterial ausgehärtet ist. Über das durch die Durchgangsöffnungen hindurchgespritzte Kunststoffmaterial können folglich die Zuschnitte Z1 bis Z3 mit dem Kunststoffmaterial miteinander "vernietet" werden.

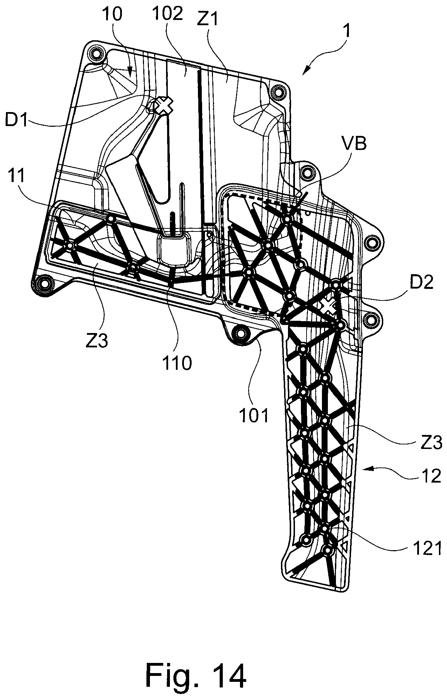

Die Figur 14 zeigt in diesem Zusammenhang mögliche Düsenpositionen D1 und D2 für das einzuspritzende Kunststoffmaterial. Darüber hinaus ist in der Figur 14 ein Voreilerbereich VB dargestellt. An diesem Voreilerbereich VB kann über das Werkzeug WZ eine der eigentlichen Formgebung vorauseilende lokale Vorformung realisiert werden. In dem Voreilerbereich VB, in dem auch ein Überlappungsbereich mehrerer Zuschnitte Z1 bis Z3 vorgesehen ist, kann beispielsweise ein leichtes Überpressen um 0,1 mm bis 0,2 mm erfolgen.

Abweichend zu der dargestellten Ausführungsvariante ist es selbstverständlich möglich, dass das Türmodul 1 lediglich zwei unterschiedliche Typen von Organoblech oder mehr als drei unterschiedliche Typen von Organoblechen aufweist, die zur Bildung des Türmoduls miteinander verbunden und gegebenenfalls über angespritztes Kunststoffmaterial einander fixiert sind. Die unterschiedlichen Typen von Organoblechen können sich hierbei nicht nur hinsichtlich ihrer Materialstärke und der Anzahl vorhandener Faserlagen, sondern auch durch die Materialien ihrer Verstärkungsfasern und/oder Ausrichtung dieser Verstärkungsfasern voneinander unterscheiden.

### Bezugszeichenliste

- 1: Türmodul
- 10: Trägerbereich
- 100: Spritzgießabschnitt mit Verstärkungsrippen
- 101: Spritzgießabschnitt mit Befestigungsöffnungen
- 102: Spritzgießabschnitt
- 11: Verstärkungsbereich
- 110: Spritzgießabschnitt mit Verstärkungsrippen
- 12: Rahmenbereich
- 120: Spritzgießabschnitt mit Teil einer rahmenseitigen Dekoroberfläche
- 121: Spritzgießabschnitt mit Verstärkungsrippen
- 2A, 2B: Führungsschiene (Funktionskomponente)
- A: Antrieb (Funktionskomponente)
- a: Länge
- B: Fensterbrüstung
- b: Breite
- D1, D2: Düsenposition
- FR: Fensterrahmen
- I: Innenverkleidungsteil
- K: Knotenbereich
- N: Nadel
- O: Fensteröffnung
- R: Rohbau
- T: Fahrzeugtür
- VB: Voreilerbereich
- WZ: Werkzeug
- WZa, WZb: Werkzeugseite
- Z1, Z2, Z3: Zuschnitt

## Patentansprüche

1. Türmodul für eine Fahrzeugtür (T) mit einem flächigen Trägerbereich (10), der zu einem wesentlichen Teil durch ein Organoblech gebildet ist und an dem mindestens eine Funktionskomponente (2A, 2B, A) der Fahrzeugtür (T) festzulegen ist, **dadurch gekennzeichnet, dass**
- zusätzlich zu dem Trägerbereich (10) mindestens ein weiterer Bereich (11, 12) des Türmoduls (1), der im bestimmungsgemäß montierten Zustand des Türmoduls (1) eine Fensteröffnung (O) in der Fahrzeugtür (T) berandet, zu einem wesentlichen Teil durch ein Organoblech gebildet ist,
- der Trägerbereich (10) und der mindestens eine weitere Bereich (11, 12) mit unterschiedlichen Typen von Organoblechen gebildet sind, und
- das Türmodul (1) mindestens drei unterschiedliche Typen von Organoblechen aufweist, mit denen unterschiedliche Bereiche (10, 11, 12) des Türmoduls (1) gebildet sind, wobei
- ein erster Typ von Organoblech ein einlagiges Gewebe, ein einlagiges Gelege, ein einlagiges Gestrick oder ein einlagiges UD-Tape und/oder eine Materialstärke im Bereich von 0,4 mm bis 1,0 mm aufweist,
- ein zweiter Typ von Organoblech ein mehrlagiges Gewebe, ein mehrlagiges Gelege, ein mehrlagiges Gestrick oder ein mehrlagiges UD-Tape und/oder eine Materialstärke im Bereich von 0,4 mm bis 2,0 mm aufweist, und
- ein dritter Typ von Organoblech eine Materialstärke im Bereich von 1,8 mm bis 4,0 mm aufweist.

2. Türmodul nach Anspruch 1, **dadurch gekennzeichnet, dass** der mindestens eine weitere Bereich (11, 12) eine Fensterbrüstung (B) und/oder einen die Fensteröffnung definierenden Rahmen (FR) umfasst.

3. Türmodul nach Anspruch 2, **dadurch gekennzeichnet, dass**
- sich die unterschiedlichen Typen von Organoblechen hinsichtlich einer Materialstärke, der Materialien der Verstärkungsfasern, der Ausrichtung der Verstärkungsfasern und/oder der Anzahl vorhandener Faserlagen voneinander unterscheiden, und/oder
- sich die mindestens drei unterschiedlichen Typen von Organoblechen zumindest teilweise überlappen.

4. Fahrzeugtür mit einem Türmodul (1) nach einem der Ansprüche 1 bis 3.

5. Verfahren zur Herstellung eines Türmoduls (1) für eine Fahrzeugtür (T) wobei das Verfahren folgende Schritte umfasst:
- Bereitstellen mindestens eines Organoblechzuschnitts (Z1, Z2, Z3) und
- Bilden mindestens eines Trägerbereichs (10) des Türmoduls (1), an dem mindestens eine Funktionskomponente (2A, 2B, A) der Fahrzeugtür (T) festzulegen ist, mit dem Organoblechzuschnitt (Z1, Z2, Z3), wobei
o zusätzlich zu dem Trägerbereich (10) mindestens ein weiterer Bereich (11, 12) des Türmoduls (1), der im bestimmungsgemäß montierten Zustand des Türmoduls (1) eine Fensteröffnung (O) in der Fahrzeugtür (T) berandet, zu einem wesentlichen Teil durch ein Organoblech gebildet wird,
o der mindestens eine weitere Bereich (11, 12) zumindest teilweise durch einen Organoblechzuschnitt (Z2, Z3) eines Typs Organoblech gebildet wird, der zu demjenigen Typ Organoblech verschieden ist, der für den Organoblechzuschnitt (Z1) für den Trägerbereich (10) verwendet wird, und
o mit mindestens drei unterschiedlichen Typen von Organoblechen unterschiedliche Bereiche (10, 11, 12) des Türmoduls (1) gebildet werden, wobei
- ein erster Typ von Organoblech ein einlagiges Gewebe, ein einlagiges Gelege, ein einlagiges Gestrick oder ein einlagiges UD-Tape und/oder eine Materialstärke im Bereich von 0,4 mm bis 1,0 mm aufweist,
- ein zweiter Typ von Organoblech ein mehrlagiges Gewebe, ein mehrlagiges Gelege, ein mehrlagiges Gestrick oder ein mehrlagiges UD-Tape und/oder eine Materialstärke im Bereich von 0,4 mm bis 2,0 mm aufweist, und
- ein dritter Typ von Organoblech eine Materialstärke im Bereich von 1,8 mm bis 4,0 mm aufweist.

6. Verfahren nach Anspruch 5, **dadurch gekennzeichnet, dass**
- die Organoblechzuschnitte (Z1, Z2, Z3) zumindest teilweise miteinander überlappt werden, und/oder
- an zumindest ein Teil wenigstens eines Organoblechzuschnitts (Z1, Z2, Z3) ein Kunststoffmaterial angespritzt wird, wobei insbesondere an sich überlappenden Abschnitten wenigstens zweier, aus mindestens zwei unterschiedlichen Typen von Organoblechen gebildeter Organoblechzuschnitte (Z1, Z2, Z3) sich einander zumindest teilweise überdeckende, insbesondere durch Nadeln ausgebildete Durchgangsöffnungen ausgebildet werden und durch diese Durchgangsöffnungen Kunststoffmaterial zum Verbinden der Organoblechzuschnitte (Z1, Z2, Z3) gespritzt wird.

7. Verfahren nach Anspruch 6, **dadurch gekennzeichnet, dass**, sofern an zumindest ein Teil wenigstens eines Organoblechzuschnitts (Z1, Z2, Z3) ein Kunststoffmaterial angespritzt wird, das angespritzte Kunststoffmaterial einen Abschnitt (120) einer Dekoroberfläche der Fahrzeugtür (T) bildet, die im bestimmungsgemäß montierten Zustand des Türmoduls (1) und der Fahrzeugtür (T) einem Fahrzeuginnenraum zugewandt ist und an der Fahrzeugtür (T) sichtbar ist.

8. Verfahren nach einem der Ansprüche 5 bis 7, **dadurch gekennzeichnet, dass** wenigstens einer der Organoblechzuschnitte (Z1, Z2, Z3) vor einer Einbringung in ein Formgebungswerkzeug, über das das Türmodul (1) mit seiner endgültigen Kontur ausgeformt wird, vorgeformt wird, wobei insbesondere wenigstens einer der Organoblechzuschnitte (Z1, Z2, Z3) vor einer Einbringung in das Formgebungswerkzeug nicht vorgeformt wird.

9. Verfahren nach einem der Ansprüche 5 bis 8, **dadurch gekennzeichnet, dass** wenigstens einer der Organoblechzuschnitte (Z1, Z2, Z3) bei einer Einbringung in ein Formgebungswerkzeug, über das das Türmodul (1) mit seiner endgültigen Kontur ausgeformt wird, über Fixierungselemente an einem Teil des Werkzeugs fixiert wird, bevor wenigstens ein weiterer der Organoblechzuschnitte (Z1, Z2, Z3) in das Werkzeug eingebracht wird, wobei die Fixierungselemente insbesondere Nadeln oder Klemmstifte umfassen.

10. Verfahren nach einem der Ansprüche 5 bis 9, **dadurch gekennzeichnet, dass** die Organoblechzuschnitte (Z1, Z2, Z3) in einem Formgebungswerkzeug, über das das Türmodul (1) mit seiner endgültigen Kontur ausgeformt wird, drapiert werden.

## Claims

1. A door module for a vehicle door (T), having an areal carrier region (10) which is substantially formed by an organosheet and to which at least one functional component (2A, 2B, A) of the vehicle door (T) is to be fixed,
**characterized in that**,
- in addition to the carrier region (10), at least one further region (11, 12) of the door module (1), said further region bordering a window opening (O) in the vehicle door (T) when the door module (1) is in the properly assembled state, is substantially formed by an organosheet,
- the carrier region (10) and the at least one further region (11, 12) are formed with different types of organosheets, and
- the door module (1) has at least three different types of organosheets, with which different regions (10, 11, 12) of the door module (1) are formed, wherein
- a first type of organosheet has a single-layered woven fabric, a single-layered laid scrim, a single-layered knitted fabric or a single-layered UD tape and/or a material thickness in the range from 0.4 mm to 1.0 mm,
- a second type of organosheet has a multi-layered woven fabric, a multi-layered laid scrim, a multi-layered knitted fabric or a multi-layered UD tape and/or a material thickness in the range from 0.4 mm to 2.0 mm, and
- a third type of organosheet has a material thickness in the range from 1.8 mm to 4.0 mm.

2. The door module as claimed in claim 1, **characterized in that** the at least one further region (11, 12) comprises a window sill (B) and/or a frame (FR) which defines the window opening.

3. The door module as claimed in claim 2, **characterized in that**
- the different types of organosheets differ from one another with regard to material thickness, the materials of the reinforcing fibers, the alignment of the reinforcing fibers and/or the number of fiber layers present, and/or
- the at least two different types of organosheets at least partially overlap.

4. A vehicle door having a door module (1) as claimed in one of claims 1 to 3.

5. A method for producing a door module (1) for a vehicle door (T), wherein the method comprises the following steps:
- providing at least one organosheet blank (Z1, Z2, Z3) and
- forming at least one carrier region (10) of the door module (1), to which carrier region at least one functional component (2A, 2B, A) of the vehicle door (T) is to be fixed, with the organosheet blank (Z1, Z2, Z3), wherein
∘ in addition to the carrier region (10), at least one further region (11, 12) of the door module (1), said further region bordering a window opening (O) in the vehicle door (T) when the door module (1) is in the properly assembled state, is substantially formed by an organosheet,
∘ the the at least one further region (11, 12) is at least partially formed by an organosheet blank (Z2, Z3) of a type of organosheet that differs from that type of organosheet which is used for the organosheet blank (Z1) for the carrier region (10), and
∘ with at least three different types of organosheets different regions (10, 11, 12) of the door module (1) are formed, wherein
- a first type of organosheet has a single-layered woven fabric, a single-layered laid scrim, a single-layered knitted fabric or a single-layered UD tape and/or a material thickness in the range from 0.4 mm to 1.0 mm,
- a second type of organosheet has a multi-layered woven fabric, a multi-layered laid scrim, a multi-layered knitted fabric or a multi-layered UD tape and/or a material thickness in the range from 0.4 mm to 2.0 mm, and
- a third type of organosheet has a material thickness in the range from 1.8 mm to 4.0 mm.

6. The method as claimed in claim 5, **characterized in that**
- the organosheet blanks (Z1, Z2, Z3) at least partially overlap with one another, and/or
- a plastics material is injection-molded onto at least one part of at least one organosheet blank (Z1, Z2, Z3), wherein in particular at least partially overlapping passage openings, which in particular are formed by needles, are formed on overlapping portions of at least two organosheet blanks (Z1, Z2, Z3) formed of at least two different types of organo sheet, and plastics material is injected through said passage openings in order to connect the organosheet blanks (Z1, Z2, Z3).

7. The method as claimed in claim 6, **characterized in that**, if a plastic material is injected onto at least one part of at least one organosheet blank (Z1, Z2, Z3), the injection-molded plastics material forms a portion (120) of a decorative surface of the vehicle door (T), said decorative surface facing toward a vehicle interior and being visible on the vehicle door (T) when the door module (1) and the vehicle door (T) are in the properly assembled state.

8. The method as claimed in one of claims 5 to 7, **characterized in that** at least one of the organosheet blanks (Z1, Z2, Z3) is preformed prior to introduction into a shaping tool, by means of which the door module (1) is shaped with its final contour, wherein in particular at least one of the organosheet blanks (Z1, Z2, Z3) is not preformed prior to introduction into the shaping tool.

9. The method as claimed in one of claims 5 to 8, **characterized in that** during introduction into a shaping tool, by means of which the door module (1) is shaped with its final contour, at least one of the organosheet blanks (Z1, Z2, Z3) is fixed to a part of the tool by way of fixing elements before at least a further one of the organosheet blanks (Z1, Z2, Z3) is introduced into the tool, wherein the fixing elements in particular comprise needles or a clamping pins.

10. The method as claimed in one of claims 5 to 9, **characterized in that** the organosheet blanks (Z1, Z2, Z3) are draped in a shaping tool, by means of which the door module (1) is shaped with its final contour.

## Revendications

1. Module de porte pour une porte de véhicule (T) avec une zone de support (10) plane, qui est formée pour une partie essentielle par une tôle organique et sur laquelle au moins un composant fonctionnel (2A, 2B, A) de la porte de véhicule (T) doit être fixé, **caractérisé en ce que**
- en plus de la zone de support (10), au moins une autre zone (11, 12) du module de porte (1), qui borde une ouverture de fenêtre (O) dans la porte de véhicule (T) lorsque le module de porte (1) est monté correctement, est formée pour une partie essentielle par une tôle organique,
- la zone de support (10) et ladite au moins une autre zone (11, 12) sont formées avec différents types de tôles organiques, et
- le module de porte (1) présente au moins trois types différents de tôles organiques, avec lesquelles différentes zones (10, 11, 12) du module de porte (1) sont formées, où
- un premier type de tôle organique présente un tissu monocouche, une nappe monocouche, un tricot monocouche ou un ruban UD monocouche et/ou une épaisseur de matériau dans la plage de 0,4 mm à 1,0 mm,
- un deuxième type de tôle organique présente un tissu multicouche, une nappe multicouche, un tricot multicouche ou un ruban UD multicouche et/ou une épaisseur de matériau dans la plage de 0,4 mm à 2,0 mm, et
- un troisième type de tôle organique présente une épaisseur de matériau dans la plage de 1,8 mm à 4,0 mm.

2. Module de porte selon la revendication 1, **caractérisé en ce que** ladite au moins une autre zone (11, 12) comprend une allège de fenêtre (B) et/ou un cadre (FR) définissant l'ouverture de fenêtre.

3. Module de porte selon la revendication 2, **caractérisé en ce que**
- les différents types de tôles organiques se distinguent les uns des autres en ce qui concerne une épaisseur de matériau, les matériaux des fibres de renforcement, l'orientation des fibres de renforcement et/ou le nombre de couches de fibres présentes, et/ou
- les au moins trois types différents de tôles organiques se chevauchent au moins partiellement.

4. Porte de véhicule comprenant un module de porte selon l'une quelconque des revendications 1 à 3.

5. Procédé de fabrication d'un module de porte (1) pour une porte de véhicule (T), le procédé comprenant les étapes suivantes :
- prévoir au moins un flan de tôle organique (Z1, Z2, Z3) et
- former au moins une zone de support (10) du module de porte (1), sur laquelle au moins un composant fonctionnel (2A, 2B, A) de la porte de véhicule (T) doit être fixé, avec le flan de tôle organique (Z1, Z2, Z3), dans lequel
∘ en plus de la zone de support (10), au moins une autre zone (11, 12) du module de porte (1), qui borde une ouverture de fenêtre (O) dans la porte de véhicule (T) lorsque le module de porte (1) est monté correctement, est formée pour une partie essentielle par une tôle organique,
∘ ladite au moins une autre zone (11, 12) est formée au moins partiellement par un flan de tôle organique (Z2, Z3) d'un type de tôle organique qui est différent du type de tôle organique utilisé pour le flan de tôle organique (Z1) pour la zone de support (10), et
∘ avec au moins trois différents types de tôles organiques des zones différentes (10, 11, 12) du module de porte (1) sont formées, où
- un premier type de tôle organique présente un tissu monocouche, une nappe monocouche, un tricot monocouche ou un ruban UD monocouche et/ou une épaisseur de matériau dans la plage de 0,4 mm à 1,0 mm,
- un deuxième type de tôle organique présente un tissu multicouche, une nappe multicouche, un tricot multicouche ou un ruban UD multicouche et/ou une épaisseur de matériau dans la plage de 0,4 mm à 2,0 mm, et
- un troisième type de tôle organique présente une épaisseur de matériau dans la plage de 1,8 mm à 4,0 mm.

6. Procédé selon la revendication 5, **caractérisé en ce que**
- les flans de tôle organique (Z1, Z2, Z3) se chevauchent au moins partiellement l'un l'autre, et/ou
- une matière plastique est injectée sur au moins une partie d'au moins un flan de tôle organique (Z1, Z2, Z3), des ouvertures de passage se recouvrant au moins partiellement, en particulier formées par des aiguilles, étant formées en particulier sur des tronçons se chevauchant d'au moins deux flans de tôle organique (Z1, Z2, Z3) formés à partir d'au moins deux types différents de tôles organiques, et une matière plastique étant injectée à travers ces ouvertures de passage pour relier les flans de tôle organique (Z1, Z2, Z3).

7. Procédé selon la revendication 6, **caractérisé en ce que**, dans la mesure où une matière plastique est injectée sur au moins une partie d'au moins un flan de tôle organique (Z1, Z2, Z3), la matière plastique injectée forme un tronçon (120) d'une surface décorative de la porte de véhicule (T), qui fait face à un habitacle de véhicule lorsque le module de porte (1) et la porte de véhicule (T) sont montés correctement, et qui est visible sur la porte de véhicule (T).

8. Procédé selon l'une quelconque des revendications 5 à 7, **caractérisé en ce qu'**au moins l'un des flans de tôle organique (Z1, Z2, Z3) est préformé avant une introduction dans un outil de formage par lequel le module de porte (1) est formé avec son contour final, en particulier au moins l'un des flans de tôle organique (Z1, Z2, Z3) n'est pas préformé avant une introduction dans l'outil de formage.

9. Procédé selon l'une quelconque des revendications 5 à 8, **caractérisé en ce que**, lors d'une introduction dans un outil de formage par lequel le module de porte (1) est formé avec son contour final, au moins l'un des flans de tôle organique (Z1, Z2, Z3) est fixé sur une partie de l'outil par l'intermédiaire d'éléments de fixation avant qu'au moins un autre des flans de tôle organique (Z1, Z2, Z3) ne soit introduit dans l'outil, les éléments de fixation comprenant en particulier des aiguilles ou des broches de serrage.

10. Procédé selon l'une quelconque des revendications 5 à 9, **caractérisé en ce que** les flans de tôle organique (Z1, Z2, Z3) sont drapés dans un outil de formage par lequel le module de porte (1) est formé avec son contour final.
